# EUROPEAN PATENT APPLICATION

(11) **EP 4 474 570 A1**
(43) Date of publication of application: **11.12.2024**
(21) Application number: 23749676.5
(22) Date of filing: 27.01.2023
(51) Int. Cl.: D21F 5/02, C08L 83/04

(54) **CONTAMINATION PREVENTING AGENT COMPOSITION**

(30) Priority: 01.02.2022 JP 2022014553
(71) Applicant: Maintech Co., Ltd., Chiyoda-ku Tokyo 100-0005 (JP)
(72) Inventor: SEKIYA Hiroshi, Tokyo 100-0005 (JP); YUSA, Kazuyuki, Fuji-shi, Shizuoka 417-0003 (JP); NOMA, Misa, Fuji-shi, Shizuoka 417-0003 (JP)
(74) Representative: Goddar, Heinz J.
(86) International application number: PCT/JP2023/002556
(87) International publication number: WO 2023/149360

(57) **Abstract**

To provide a contamination preventing agent composition having a sufficiently excellent contamination preventing effect and its durability.

The present invention is a contamination preventing agent composition to be applied to a dry part D of a papermaking process, wherein
the composition is an emulsion comprising a silicone-based oil that is liquid at room temperature, an aqueous medium that is liquid at room temperature, and a dispersant for dispersing the silicone-based oil in the aqueous medium,
the aqueous medium comprises water and a polyhydric alcohol dissolved in the water,
the boiling point of the polyhydric alcohol is greater than 100°C,
the blending ratio of the silicone-based oil to 1 part by mass of the polyhydric alcohol is 0.5 to 50 parts by mass,
the blending ratio of the water to 1 part by mass of the polyhydric alcohol is 25 to 300 parts by mass, and
the blending ratio of the dispersant to 1 part by mass of the polyhydric alcohol is 0.1 to 50 parts by mass.

## Description

### Technical field

The present invention relates to a contamination preventing agent composition to be applied to a dry part of a papermaking process.

### Background Art

The papermaking process generally includes a wire part in which a liquid in which pulp is dispersed in water is placed on a papermaking mesh (wire), and excess water is allowed to fall naturally to produce wet paper, a press part in which the wet paper is passed between a pair of press rolls and pressed by the press rolls through a felt, thereby transferring the water in the wet paper to the felt and dehydrating the wet paper, a dry part in which the wet paper that has passed through the press part is dried by contacting it sequentially with multiple heated dryer rolls through a canvas, producing paper, a calendar part in which the paper is passed between calendar rolls to smooth out any unevenness on the surface, and a reel part in which the paper is wound onto a spool.

However, in the above-mentioned dry part, there is a problem that, for example, if contaminants such as pitch, paper powder, etc. adhere to the surface of the roll that guides the wet paper, the contaminants will be transferred and adhere to the roll every time the paper is guided by it, resulting in a significant reduction in yield.

In response to this, in order to prevent contamination in a dry part of a papermaking machine as much as possible, a contamination preventing agent composition that is applied to the dry part is known (see, e.g., Patent Literature 1).

Such a contamination preventing agent composition is composed of an emulsion containing an amino-modified silicone, and of a re-emulsifying agent.

### Citation List

### Patent Literature

PTL 1: Japanese Patent Application Laid-Open No. 2016-186141

### Summary of Invention

### Technical Problem

However, although the contamination preventing agent composition described in the above Patent Literature 1 does exhibit a contamination preventing effect, it cannot be said that the durability of the contamination preventing effect is excellent.

The present invention has been made in view of the above circumstances, and an object of the present invention is to provide a contamination preventing agent composition having a sufficiently excellent contamination preventing effect and its durability.

### Solution to Problems

The present inventors have conducted extensive research to solve the above problems and have come up with the idea of incorporating a predetermined amount of polyhydric alcohol, which is unlikely to evaporate even when applied to a heated roll, as an aqueous medium constituting the emulsion.

The inventors have found that the above problems can be solved by adjusting the blending ratios of the silicone-based oil, water and dispersant to the polyhydric alcohol within respective prescribed ranges, and have thus completed the present invention.

The present invention is a contamination preventing agent composition to be applied to a dry part of a papermaking process, wherein the composition is an emulsion comprising a silicone-based oil that is liquid at room temperature, an aqueous medium that is liquid at room temperature, and a dispersant for dispersing the silicone-based oil in the aqueous medium, the aqueous medium comprises water and a polyhydric alcohol dissolved in the water, the boiling point of the polyhydric alcohol is greater than 100°C, the blending ratio of the silicone-based oil to 1 part by mass of the polyhydric alcohol is 0.5 to 50 parts by mass, the blending ratio of the water to 1 part by mass of the polyhydric alcohol is 25 to 300 parts by mass, and the blending ratio of the dispersant to 1 part by mass of the polyhydric alcohol is 0.1 to 50 parts by mass.

In the contamination preventing agent composition of the present invention, the polyhydric alcohol is preferably at least one selected from the group consisting of glycerin, ethylene glycol, diethylene glycol, triethylene glycol and polyethylene glycol.

In the contamination preventing agent composition of the present invention, it is preferable that the polyhydric alcohol is polyethylene glycol that is liquid at room temperature, and the number of repeating oxyethylene units of the polyethylene glycol is preferably 3 to 15.

In this case, in the contamination preventing agent composition, the hydroxyl value of the polyethylene glycol is preferably 200 or more.

For the contamination preventing agent composition of the present invention, it is preferable that the composition is used for applying to an upstream roll located on the upstream side of the multiple rolls in the dry part to form a liquid coating, for bringing a traveling body into contact with the liquid coating to transfer a part of the liquid coating to the traveling body, and for bringing the traveling body into contact with a downstream roll which is located downstream of the upstream roll to transfer the liquid coating to the downstream roll, the roll is a dryer roll or a canvas roll, when the roll is the dryer roll, the traveling body is a wet paper, and when the roll is the canvas roll, the traveling body is a canvas.

In this case, it is preferable for the contamination preventing agent composition that the upstream roll and the downstream roll are made of cast iron, that the contact angle with respect to the upstream roll and the downstream roll is 70° or less, that the viscosity is 0.001 to 1.5 Pa·s, and that the dynamic surface tension is 25 mN/m or more.

### Advantageous Effects of Invention

In the contamination preventing agent composition of the present invention, an emulsion is formed from a silicone-based oil that is liquid at room temperature, an aqueous medium that is liquid at room temperature, and a dispersant, and this aqueous medium contains a predetermined amount of a polyhydric alcohol having a boiling point of more than 100°C, hence this makes the aqueous medium less likely to evaporate due to a so-called vapor pressure drop, compared to the case of water alone.

Therefore, when the contamination preventing agent composition is applied to a heated roll, the aqueous medium is allowed to remain on the roll as much as possible, thereby making it possible to maintain the emulsion state as much as possible.

Furthermore, since the polyhydric alcohol itself is aqueous, it can contribute to maintaining the emulsion state.

In the above-mentioned contamination preventing agent composition, by maintaining the emulsion state as much as possible, it is possible to fully exert the contamination preventing effect based on the silicone-based oil and to fully maintain the contamination preventing effect (hereinafter also simply referred to as the "maintenance effect"), as described above.

For comparison, when the aqueous medium evaporates and the emulsion state collapses, since the silicone-based oil is oily, even if the silicone-based oil acts on contaminants, it becomes difficult to peel or remove them with water.

In the contamination preventing agent composition of the present invention, the blending ratio of the silicone-based oil, the blending ratio of the water, and the blending ratio of the dispersant to 1 part by mass of the polyhydric alcohol are within the above-mentioned ranges, so that the contamination preventing effect and the maintenance effect can be fully exhibited.

It is also possible to improve the dispersibility which allows the silicone-based oil to be uniformly dispersed in the aqueous medium, and the storage stability, which prevents the both from separating over time. This can suppress uneven application and further improve the contamination preventing effect.

In the contamination preventing agent composition of the present invention, when the polyhydric alcohol is at least one selected from the group consisting of glycerin, ethylene glycol, diethylene glycol, triethylene glycol, and polyethylene glycol, its versatility is excellent and thus it is inexpensive, and its compatibility with water is also excellent, hence, the contamination preventing effect and maintenance effect can be more fully exhibited.

Among these, when the polyhydric alcohol is polyethylene glycol that is liquid at room temperature and the number of repeating oxyethylene units in the polyethylene glycol is 3 to 15, the contribution of the polyhydric alcohol itself to maintaining the emulsion state is more increased, and therefore the maintenance effect can be improved particularly. In addition, since the polyhydric alcohol is liquid at room temperature, it is possible to prevent itself from solidifying and becoming a contaminant.

In this case, the hydroxyl value of the polyethylene glycol is preferably 200 or more.

In this case, compatibility with water is further improved, making it possible to further enhance the contamination preventing effect and maintenance effect.

As described above, the contamination preventing agent composition of the present invention has excellent contamination preventing effect and its durability, and is therefore suitably used in applications in which the contamination preventing agent composition is applied to an upstream roll located on the upstream side of multiple rolls (e.g., a dryer roll or a canvas roll) in a dry part to form a liquid coating, a traveling body is brought into contact with the liquid coating to transfer a part of the liquid coating to the traveling body, and the traveling body is brought into contact with a downstream roll located downstream of the upstream roll to transfer the liquid coating to the downstream roll.

In addition, when the polyhydric alcohol described above is liquid at room temperature, the amount of transfer to the traveling body (hereinafter also referred to as the "pick-up amount") is improved, and the maintenance effect on the downstream roll is also excellent.

In this case, for the contamination preventing agent composition, when the contact angle to the upstream roll and the downstream roll which are made of cast iron, the viscosity, the dynamic surface tension, and the moisture content of the traveling body when in contact with the upstream roll and downstream roll are all within the above-mentioned ranges, a liquid coating is easily formed on the rolls and the liquid coating is easily transferred to the traveling body, making it more suitable for the above-mentioned applications.

### Brief Description of Drawing

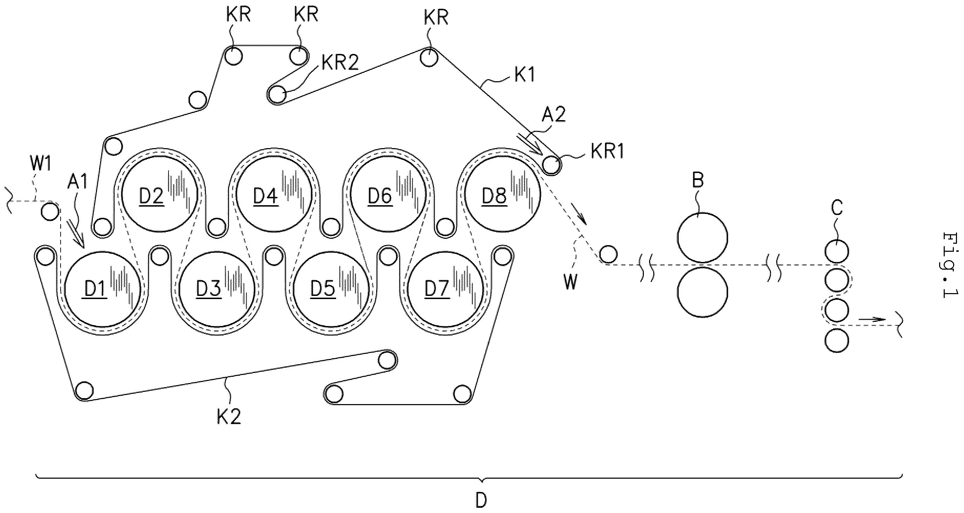

Figure 1 is a schematic diagram for explaining a dry part in which a contamination preventing agent composition according to the present embodiment is used.

### Description of Embodiments

Hereinafter, preferred embodiments of the present invention will be described in detail with reference to the drawing as necessary.

In addition, unless otherwise specified, positional relationships such as up, down, left, right will be based on the positional relationships shown in the drawing.

Furthermore, the dimensional ratios of the drawing are not limited to those shown in the drawing.

The contamination preventing agent composition according to the present embodiment is a liquid agent for preventing contamination, and is applied to a dry part of a papermaking process.

Specifically, for example, the composition is applied to a roll (such as a dryer roll or a canvas roll) constituting a dry part.

Details of these will be described later.

When such a contamination preventing agent composition is applied to a dry part, a liquid coating is formed on the applied area.

This makes it possible to prevent contaminants from adhering to the dry part and to disperse and remove any adhering contaminants.

The contamination preventing agent composition is an emulsion having an oily silicone-based oil that is liquid at room temperature, an aqueous medium that is liquid at room temperature, and a dispersant for dispersing the silicone-based oil in the aqueous medium.

Generally, a large amount of water is used in a papermaking process, and therefore, in the contamination preventing agent composition, an oily silicone-based oil having a contamination preventing effect is used in an emulsion form.

This prevents the silicone-based oil from being repelled by the remaining water and failing to be applied to the dry parts when the contamination preventing agent composition is applied to the dry parts.

Therefore, when the contamination preventing agent composition is applied to a dry part, a liquid coating made of the emulsion is formed on the surface of the part to which it is applied.

Specific examples of contaminants include pitch, paper powder, talc, clay, calcium carbonate, wood resin, and residues of chemicals used in a papermaking process (for example, starch-polyacrylamide, etc. in the case of paper strength agents, and rosin soap, alkyl ketene dimer, alkenyl succinic anhydride, polyvinyl alcohol, starch, styrene-acrylic polymers, etc. in the case of sizing agents).

In addition, in this specification, the term "upstream side" refers to the upstream side in the transport path of the traveling body, and the term "downstream side" refers to the downstream side in the transport path of the traveling body.

Moreover, "room temperature" refers to 20°C ± 15°C as specified by the Japanese Industrial Standards (JIS Z8703).

That is, being liquid at room temperature means that the material is in a liquid state when the temperature is within the range of 5 to 35°C.

In the contamination preventing agent composition, a silicone-based oil that is liquid at room temperature is used to disperse and remove oily contaminants.

Among the silicone-based oils, from the viewpoint of the contamination preventing effect, it is preferable to employ dimethyl silicone oil or modified silicone oil in which hydrogen atoms are substituted with modifying groups.

Examples of modified silicone oils include amino-modified silicone oil, epoxy-modified silicone oil, carboxy-modified silicone oil, carbinol-modified silicone oil, methacrylmodified silicone oil, mercapto-modified silicone oil, phenolmodified silicone oil, polyether-modified silicone oil, methylstyryl-modified silicone oil, alkyl-modified silicone oil, higher fatty acid ester-modified silicone, and fluorinemodified silicone oil.

These may be used alone or in combination.

Among these, from the viewpoints of contamination preventing effect, dispersibility and versatility, the silicone-based oil is preferably at least one selected from the group consisting of dimethylsilicone oil, amino-modified silicone oil, epoxy-modified silicone oil and polyether-modified silicone oil, and amino-modified silicone oil is more preferable since it has a particularly excellent contamination preventing effect.

In the contamination preventing agent composition, an aqueous medium that is liquid at room temperature is used to emulsify the silicone-based oil.

The aqueous medium comprises water and a polyhydric alcohol dissolved in the water.

In this manner, in the contamination preventing agent composition, the aqueous medium is a mixed solvent of water and a polyhydric alcohol, so that the water is less likely to evaporate due to a so-called vapor pressure drop.

Moreover, the polyhydric alcohol is itself aqueous, and in liquid forms hydrogen bonds between molecules in the same manner as water, so that its boiling point is higher than those of other compounds of the same molecular weight.

For these reasons, when the contamination preventing agent composition is applied to a heated roll (e.g., a dryer roll or a canvas roll), evaporation of the aqueous medium consisting of water and a polyhydric alcohol is suppressed, and the emulsion state can be maintained as much as possible even on the roll.

Furthermore, when applied to a roll and then transferred to a traveling body, it is maintained in an emulsion state on the roll, thus, a sufficient picked up amount can be obtained, as described below.

The water used here is not particularly limited, but for example, tap water, industrial water, distilled water, pure water, ion-exchanged water, and the like can be adopted.

Of these, from the viewpoint of minimizing the effect on the dispersibility of the emulsion, the water is preferably distilled water, pure water, or ion-exchanged water, and from the viewpoints of cost and versatility, the water is more preferably ion-exchanged water.

As the polyhydric alcohol, those that are soluble in water are adopted, and those having a boiling point of more than 100°C, preferably more than 200°C are adopted.

If the boiling point of the polyhydric alcohol is less than 100°C, the effect of lowering the vapor pressure of water is not obtained as compared with the case where the boiling point is within the above range, and the polyhydric alcohol itself has a disadvantage that it is easily evaporated after being applied to the roll.

The polyhydric alcohol is not particularly limited as long as it is an organic compound having two or more hydroxyl groups in the molecule, and examples thereof include ethylene glycol, diethylene glycol, triethylene glycol, tetraethylene glycol, polyethylene glycol, propylene glycol, dipropylene glycol, polypropylene glycol, 1,2-butylene glycol, 1,3-butylene glycol, polyethylene glycol, 1,2-pentanediol, hexylene glycol, glycerin, diglycerin, triglycerin, and the like.

These may be used alone or in combination.

Among these, the polyhydric alcohol is preferably at least one selected from the group consisting of glycerin, ethylene glycol, diethylene glycol, triethylene glycol, and polyethylene glycol.

In this case, it is inexpensive due to its excellent versatility, and compatibility with water is also excellent, so that the contamination preventing effect and the maintenance effect can be more fully exhibited.

Furthermore, the polyhydric alcohol is preferably glycerin or polyethylene glycol that is liquid at room temperature, since it is less likely to soak into paper and has a particularly excellent maintenance effect, and from the viewpoint of handleability, polyethylene glycol that is liquid at room temperature is more preferable.

When the polyhydric alcohol is polyethylene glycol, the number of repeating oxyethylene units in the polyethylene glycol is preferably 3 to 15, and more preferably 3 to 10. In this case, the contribution of the polyhydric alcohol itself to maintaining the emulsion state further increases, thus, the maintenance effect can be particularly further improved.

If the number of repeating oxyethylene units in the polyethylene glycol is less than 3, the composition will be more likely to soak into paper and the maintenance effect may not be fully exhibited, compared with cases where the number of repeating oxyethylene units is within the above range, while if the number of repeating oxyethylene units in the polyethylene glycol exceeds 15, there is a drawback in that the transferability of the contamination preventing agent composition to paper is reduced, compared with cases where the number of repeating oxyethylene units is within the above range.

When the polyhydric alcohol is polyethylene glycol, the molecular weight of the polyethylene glycol is preferably 200 to 600, and more preferably 200 to 400. In this case, the contribution of the polyhydric alcohol itself to maintaining the emulsion state further increases, thus, the maintenance effect can be particularly further improved.

If the molecular weight of the polyethylene glycol is less than 200, it will be more likely to soak into paper and may not be able to fully exert its maintenance effect, compared with cases where the molecular weight is within the above range, while if the molecular weight of the polyethylene glycol exceeds 600, there is a drawback in that the transferability of the contamination preventing agent composition to paper is reduced, compared with cases where the molecular weight is within the above range.

When the polyhydric alcohol is polyethylene glycol, the polyethylene glycol preferably has a hydroxyl value of 200 or more.

In this case, compatibility with water is further improved, making it possible to further exhibit the contamination preventing effect and the maintenance effect.

If the hydroxyl value of the polyethylene glycol is less than 200, there is a drawback in that the affinity with the moisture in the paper is reduced, and the transferability of the contamination preventing agent composition to the paper is reduced, compared with the cases where the hydroxyl value is within the above range.

In the contamination preventing agent composition, a dispersant is used to emulsify the silicone-based oil and the aqueous medium.

The dispersant is not particularly limited, and a nonionic surfactant, an anionic surfactant, a cationic surfactant, an amphoteric surfactant, and the like are used.

Among these, the dispersant is preferably at least one selected from the group consisting of nonionic surfactants and anionic surfactants, from the viewpoint of storage stability of the emulsion.

Examples of the nonionic surfactants include polyoxyethylene alkyl ethers, polyoxyethylene alkyl thioethers, polyoxyethylene alkyl phenyl ethers, polyoxyethylene polyoxypropylene glycols, polyoxyethylene fatty acid esters, polyoxyethylene sorbitan fatty acid esters, polyoxyethylene sorbitol fatty acid esters, glycerin fatty acid esters, and the like.

These may be used alone or in combination.

Examples of the anionic surfactants include aliphatic monocarboxylates, polyoxyethylene alkyl ether carboxylates, N-acylsarcosine salts, N-acylglutamates, dialkyl sulfosuccinates, alkanesulfonates, olefinsulfonates, alkylbenzenesulfonates, naphthalenesulfonate-formaldehyde condensates, alkylnaphthalenesulfonates, N-methyl-N-acyltaurates, alkylsulfates, polyoxyethylene alkyl ether sulfates, oil and fat sulfate esters, alkyl phosphates, polyoxyethylene alkyl ether phosphates, polyoxyethylene alkyl phenyl ether phosphates, and the like. These may be used alone or in combination.

Among these, the dispersant is preferably a nonionic surfactant, and from the viewpoints of dispersibility and storage stability, it is preferably at least one selected from the group consisting of polyoxyalkylene alkyl ethers, polyoxyalkylene fatty acid esters, polyoxyalkylene sorbitan fatty acid esters, and polyoxyalkylene sorbitol fatty acid esters.

In the contamination preventing agent composition, the blending ratio of the silicone-based oil to 1 part by mass of the polyhydric alcohol is 0.5 to 50 parts by mass.

If the blending ratio of the silicone-based oil to 1 part by mass of the polyhydric alcohol is less than 0.5 parts by mass, the contamination preventing effect will be insufficient, and if the blending ratio of the silicone-based oil to 1 part by mass of the polyhydric alcohol exceeds 50 parts by mass, the effect of maintaining the contamination preventing effect will not be sufficiently obtained.

In the contamination preventing agent composition, the blending ratio of water to 1 part by mass of the polyhydric alcohol is 25 to 300 parts by mass.

If the ratio of water to 1 part by mass of the polyhydric alcohol is less than 25 parts by mass, the cost will be high and dispersibility may decrease, while if the blending ratio of water to 1 part by mass of the polyhydric alcohol is more than 300 parts by mass, the maintenance effect will not be sufficiently obtained.

In the contamination preventing agent composition, the blending ratio of the dispersant to 1 part by mass of the polyhydric alcohol is 0.1 to 50 parts by mass.

If the blending ratio of the dispersant to 1 part by mass of the polyhydric alcohol is less than 0.1 parts by mass, the dispersibility and storage stability will be insufficient, while if the blending ratio of the dispersant to 1 part by mass of the polyhydric alcohol exceeds 50 parts by mass, the contamination preventing effect may decrease.

The contamination preventing agent composition according to this embodiment contains a silicone-based oil, an aqueous medium, and a dispersant, and these are blended in the blending ratio described above, so that the contamination preventing effect based on the silicone-based oil is fully exerted and the effect can be fully maintained.

In addition, since the dispersibility and storage stability are also excellent, uneven application is suppressed, and the contamination preventing effect can be further improved.

The contamination preventing agent composition has a dynamic surface tension of 25 mN/m or more at a life time of 100 milliseconds as measured by the maximum bubble pressure method.

If the dynamic surface tension of the contamination preventing agent composition is less than 25 mN/m, dripping is likely to occur, making it difficult to form a uniform liquid coating of sufficient thickness on the roll surface.

In addition, the dynamic surface tension is preferably 65 mN/m or less.

If the dynamic surface tension exceeds the above range, the transfer speed to the traveling body tends to be slower than when the dynamic surface tension is within the above range.

In this case, the pick up amount of the liquid coating to the traveling body becomes insufficient.

The dynamic surface tension is a value measured in an environment of 25°C using an automatic dynamic surface tensiometer BP-D5 (Kyowa Interface Science Co., Ltd.).

The contamination preventing agent composition preferably has a viscosity of 0.001 to 1.5 Pa·s.

If the viscosity of the contamination preventing agent composition is less than 0.001 Pa·s, the contamination preventing agent composition is more likely to scatter when applied by spraying, and there is a risk that a sufficient amount may not be applied, compared to when the viscosity is within the above-mentioned range, while if the viscosity of the contamination preventing agent composition exceeds 1.5 Pa·s, there is a disadvantage that the contamination preventing agent composition is more likely to become uneven when applied by spraying, compared to when the viscosity is within the above-mentioned range.

In the contamination preventing agent composition, the emulsion is preferably an O/W type emulsion.

In this case, there is an advantage that the affinity between the moisture in the paper and the contamination preventing agent composition is high, and the contamination preventing agent composition can be easily transferred to the paper.

Another advantage is that the surface tension and viscosity are reduced, making it easier to spray.

The contamination preventing agent composition according to the present embodiment is obtained as an emulsion by stirring and mixing a silicone-based oil, an aqueous medium, and a dispersant.

In the above stirring and mixing, a hand mixer, a homogenizer, or the like is suitably used.

Alternatively, the dispersion may be carried out using a dispersing machine such as a sand mill, a bead mill, a ball mill, or the like.

As described above, when the contamination preventing agent composition is applied to a dry part, a liquid coating is formed, thereby preventing the dry part from being contaminated.

In addition, it is possible that the contamination preventing agent composition is applied, for example, to an upstream roll located on the upstream side among multiple rolls in the dry part to form a liquid coating, and a traveling body is brought into contact with the liquid coating to transfer a part of the contamination preventing agent composition that constitutes the liquid coating to the traveling body, and the contamination preventing agent composition is transferred to the downstream roll by bringing the traveling body into contact with a downstream roll located downstream of the upstream roll, thereby forming a liquid coating on the downstream roll.

Figure 1 is a schematic diagram for explaining a dry part in which the contamination preventing agent composition according to the present embodiment is used.

The contamination preventing agent composition is used in a dry part D of a papermaking process.

The dryer part D includes a plurality of cylindrical dryer rolls D1, D2, D3, D4, D5, D6, D7 and D8 (hereinafter also referred to as "D1 to D8") for heating and drying the wet paper W1, canvases K1 and K2 for pressing the wet paper W1 against the dryer rolls D1 to D8, a canvas roll KR for guiding the canvases K1 and K2, a breaker stack roll B for gently adjusting the smoothness and thickness of the dried paper W, and a calendar roll C for adjusting the smoothness and thickness of the paper W.

That is, the plurality of rolls in the dry part refer to the dryer rolls D1 to D8, the canvas rolls KR, KR1, and KR2, the breaker stack roll B, or the calendar roll C.

In the dry part D, the wet paper W is pressed against the surfaces of the dryer rolls D1 to D8 by the canvases K1 and K2.

As a result, the wet paper W adheres to the dryer rolls D1 to D8 and is heated and dried at the same time.

The temperature of the dryer is generally 30 to 120°C.

Thereafter, the wet paper W is sandwiched between breaker stack rolls B, and then the wet paper W is densified by calendar rolls C.

For example, when the multiple rolls are dryer rolls and the traveling body is a wet paper, the contamination preventing agent composition is applied to the dryer roll D1 (upstream roll) on the upstream side of the dryer part D at a position of arrow A1.

The method for applying the contamination preventing agent composition is not particularly limited, and may be, for example, a shower method or a spray method in which the composition is sprayed from a distant position using a spray nozzle, a coating method in which the composition is directly applied using an applicator such as a sponge, or the like.

After the contamination preventing agent composition is applied to the position of arrow A1 on the dryer roll D1, as the dryer roll D1 rotates to guide the wet paper W1 (traveling body), a liquid coating of the contamination preventing agent composition is transferred to the wet paper W1.

As a result, a liquid coating of the contamination preventing agent composition is carried by the wet paper W1 and applied to the downstream dryer roll D3 (downstream roll) as the wet paper W1 comes into contact with the downstream dryer roll D3 to which the wet paper W1 is guided.

The same process is repeated to apply it to dryer rolls D5 and D7 located further downstream.

In the same manner, the contamination preventing agent composition is applied to the upstream dryer roll D2, and then applied to downstream dryer rolls D4, D6, and D8 via the wet paper.

When the plurality of rolls are canvas rolls and the traveling body is a canvas, the contamination preventing agent composition is applied to the canvas roll KR1 upstream of the dry part D at a position indicated by the arrow A2.

The method for applying the contamination preventing agent composition is not particularly limited, and may be, for example, a shower method or a spray method in which the composition is sprayed from a distant position using a spray nozzle, a coating method in which the composition is directly applied using an applicator such as a sponge, or the like.

After the contamination preventing agent composition is applied to a position of the arrow A2 of the canvas roll D1, as the canvas roll KR1 rotates to guide the canvas K1 (traveling body), a liquid coating of the contamination preventing agent composition is transferred to the canvas K1.

As a result, the liquid coating of the contamination preventing agent composition is carried by the canvas K1 and applied to the canvas roll KR (downstream roll) inside the loop as the canvas K1 is guided and brought into contact with the canvas roll KR.

In the same manner, the contamination preventing agent composition is applied to the canvas roll KR2 on the outside of the loop.

As described above, the contamination preventing agent composition is an emulsion of a silicone-based oil and a polyhydric alcohol that is difficult to evaporate prepared under specific conditions, and therefore has excellent contamination preventing effects and their durability.

For this reason, the contamination preventing agent composition can be suitably used in applications in which the contamination preventing agent composition is applied to the entire dryer rolls D1 to D8 or the canvas rolls KR, KR1, and KR2 by repeating transfer and application.

In the above applications, cast iron is used for the dryer rolls D1 to D8 or the canvas rolls KR, KR1, and KR2. Note that cast iron is obtained by casting an alloy containing iron as a main component and at least one selected from the group consisting of nickel, chromium, carbon, and silicon.

Furthermore, the cast iron preferably has a ten-point average roughness (Rz) of 0.16 um or less, a maximum height (Rmax) of 0.21 um or less, and an arithmetic average roughness (Ra) of 0.04 um or less.

In this case, it is preferable that the contact angle of the contamination preventing agent composition with respect to the dryer rolls D1 to D8 or the canvas rolls KR, KR1, KR2 is 70° or less.

In this case, it is possible to instantly form a coating on the roll surface.

Furthermore, if the contact angle of the contamination preventing agent composition with respect to cast iron exceeds 70°, there is a drawback in that it becomes more difficult to form a uniform liquid coating compared with the case where the contact angle is within the above range.

The contact angle is a value measured using a DropMaster DMs-401 and a Teflon needle 18G in an environment of 25°C and a humidity of 50%.

The moisture content of the wet paper W1 (traveling body) when it comes into contact with the dryer rolls D1 to D8 is preferably 8 to 55%. The moisture content is the ratio of the weight of water to the total weight of the wet paper W1 containing moisture.

If the moisture content of the wet paper W1 is less than 8%, the liquid coating may be absorbed and a sufficient amount of the contamination preventing agent composition may not be applied to the downstream dryer roll, compared to when the moisture content is within the above range, while if the moisture content of the wet paper W1 exceeds 55%, the pick up amount of contamination preventing agent composition tends to be insufficient, compared to when the moisture content is within the above range.

The moisture content of the wet paper W1 can be adjusted by the transport speed of the wet paper in the wire part, the pressing pressure of the press roll in the press part, and the like.

Although the preferred embodiments of the present invention have been described above, the present invention is not limited to the above-described embodiments.

The contamination preventing agent composition according to the present embodiment may contain additives such as a chelating agent, a pH adjuster, a preservative, a viscosity adjuster, a solid lubricant, a wetting agent, an anti-dusting agent, a release agent, an adhesive, a surface modifier, a detergent, a paper strength agent, a sizing agent, a retention aid, an anti-slip agent, a softener, and the like.

In the contamination preventing agent composition according to the present embodiment, the contamination preventing agent composition is applied to a dryer roll or a canvas roll in a dry part, but is not limited thereto.

It may be applied directly to the canvas, or may be applied directly to a calender roll C, a breaker stack roll B, or the like.

In the contamination preventing agent composition according to this embodiment, the roll is made of cast iron, but it may be made of another material.

### (EXAMPLES)

The present invention will be described in more detail below based on examples and comparative examples, but the present invention is not limited to the following examples.

### (1) Experiments on aqueous medium

### <Examples 1 to 9 and Comparative Examples 1 and 2>

As the aqueous medium, ion-exchanged water (water) and the compounds shown in Table 1 were used.

As the silicone-based oil, amino-modified silicone oil (silicone-based oil) was used.

As the dispersant, polyoxyethylene alkyl ether (nonionic surfactant) was used.

These were mixed so that the compound shown in Table 1 was 1 part by mass, the amino-modified silicone oil was 10 parts by mass, the ion-exchanged water was 36.5 parts by mass, and the polyoxyethylene alkyl ether was 2.5 parts by mass, to obtain a sample of the contamination preventing agent composition.

In Table 1, "PEG" means polyethylene glycol, "Gr" means glycerin, "EG" means ethylene glycol, "DEG" means diethylene glycol, and "TEG" means triethylene glycol.

**(Table 1)**

| | Compound (aqueous medium) | Boiling point | Number of EO repetitions | Hydroxyl value |
|---|---|---|---|---|
| Comparative Example 1 | PEG | 80 | 7 | 260 |
| Comparative Example 2 | PEG | 100 | 8 | 270 |
| Example 1 | PEG | 120 | 8 | 270 |
| Example 2 | PEG | 150 | 8 | 270 |
| Example 3 | PEG | 180 | 9 | 280 |
| Example 4 | PEG | 200 | 9 | 280 |
| Example 5 | PEG | 220 | 10 | 280 |
| Example 6 | Gr | 290 | - | - |
| Example 7 | EG | 197 | 1 | - |
| Example 8 | DEG | 245 | 2 | - |
| Example 9 | TEG | 288 | 3 | - |

### (2) Experiments on blending ratio

### <Examples 10 to 31 and Comparative Examples 3 to 8>

As the aqueous medium, ion-exchanged water (water) and the polyethylene glycol of Example 4 (boiling point 200, number of EO repeats 9, hydroxyl value 280) were used.

As the silicone-based oil, amino-modified silicone oil (silicone-based oil) was used.

As the dispersant, polyoxyethylene alkyl ether (nonionic surfactant) was used.

These were mixed in the blending ratio shown in Table 2 to obtain samples of contamination preventing agent composition.

In Table 2, "Am" means amino-modified silicone oil, and "POE" means polyoxyethylene alkyl ether.

**(Table 2)**

| | PEG | Am | Ion-exchanged water | POE |
|---|---|---|---|---|
| Comparative Example3 | 1 | 0.3 | 36.5 | 2.5 |
| Example 10 | 1 | 0.5 | 36.5 | 2.5 |
| Example 11 | 1 | 1 | 36.5 | 2.5 |
| Example 12 | 1 | 10 | 36.5 | 2.5 |
| Example 13 | 1 | 20 | 36.5 | 2.5 |
| Example 14 | 1 | 30 | 36.5 | 2.5 |
| Example 15 | 1 | 40 | 36.5 | 2.5 |
| Example 16 | 1 | 50 | 36.5 | 2.5 |
| Comparative Example4 | 1 | 60 | 36.5 | 2.5 |
| Comparative Example5 | 1 | 10 | 20 | 2.5 |
| Example 17 | 1 | 10 | 25 | 2.5 |
| Example 18 | 1 | 10 | 40 | 2.5 |
| Example 19 | 1 | 10 | 50 | 2.5 |
| Example 20 | 1 | 10 | 100 | 2.5 |
| Example 21 | 1 | 10 | 200 | 2.5 |
| Example 22 | 1 | 10 | 300 | 2.5 |
| Comparative Example6 | 1 | 10 | 350 | 2.5 |
| Comparative Example7 | 1 | 10 | 36.5 | 0.05 |
| Example 23 | 1 | 10 | 36.5 | 0.1 |
| Example 24 | 1 | 10 | 36.5 | 0.5 |
| Example 25 | 1 | 10 | 36.5 | 1 |
| Example 26 | 1 | 10 | 36.5 | 5 |
| Example 27 | 1 | 10 | 36.5 | 10 |
| Example 28 | 1 | 10 | 36.5 | 20 |
| Example 29 | 1 | 10 | 36.5 | 30 |
| Example 30 | 1 | 10 | 36.5 | 40 |
| Example 31 | 1 | 10 | 36.5 | 50 |
| Comparative Example8 | 1 | 10 | 36.5 | 60 |

### (Evaluation)

The samples obtained in Examples 1 to 31 and Comparative Examples 1 to 8 were sprayed onto a specified dryer roll of an operating papermaking machine using a mist runner (spraying device, manufactured by Maintech Co., Ltd.) to a concentration of 400 µg/m².

After one week had passed, the amount of contaminants adhered to the dryer roll was visually evaluated.

The results obtained are shown in Table 3.

In Table 3, "A" indicates a state in which no contamination (pitch or paper powder) is attached to the surface of the dryer roll, "B" indicates a state in which a contaminant (pitch or paper powder) is attached to about 10% of the surface of the dryer roll, "C" indicates a state in which a contaminant (pitch or paper powder) is attached to about 10-30% of the surface of the dryer roll, and "D" indicates a state in which a contaminant (pitch or paper powder) is attached to about 30-40% of the surface of the dryer roll.

**(Table 3)**

| | | | |
|---|---|---|---|
| Comparative Example1 | D | Comparative Example5 | D |
| Comparative Example2 | C | Example 17 | B |
| Example 1 | A | Example 18 | A |
| Example 2 | A | Example 19 | A |
| Example 3 | A | Example 20 | A |
| Example 4 | A | Example 21 | A |
| Example 5 | A | Example 22 | B |
| Example 6 | B | Comparative Example6 | D |
| Example 7 | B | Comparative Example7 | D |
| Example 8 | B | Example 23 | B |
| Example 9 | B | Example 24 | A |
| Comparative Example3 | D | Example25 | A |
| Example10 | B | Example26 | A |
| Example11 | A | Example27 | A |
| Example 12 | A | Example 28 | A |
| Example 13 | A | Example 29 | A |
| Example 14 | A | Example 30 | A |
| Example 15 | A | Example 31 | B |
| Example 16 | B | Comparative Example8 | D |
| Comparative Example4 | D | | |

From the above, it was confirmed that the samples of the contamination preventing agent compositions of Examples 1 to 31 of the present invention all have excellent contamination preventing effects compared to the samples of Comparative Examples 1 to 8, and that the effects are maintained for one week, so that the maintenance effect is also excellent.

### Industrial Applicability

The contamination preventing agent composition of the present invention is used as an anti-contaminant agent in a dry part of a papermaking process.

The contamination preventing agent composition of the present invention has a sufficiently excellent contamination preventing effect and its durability.

### Reference Signs List

B...Breaker stack roll,
C...Calendar roll,
D...Dry part,
D1, D2, D3, D4, D5, D6, D7, D8...Dryer roll,
K1, K2...Canvas,
KR, KR1, KR2...Canvas roll,
W... Paper,
W1... Wet paper

## Claims

1. A contamination preventing agent composition to be applied to a dry part of a papermaking process, wherein
the composition is an emulsion comprising a silicone-based oil that is liquid at room temperature, an aqueous medium that is liquid at room temperature, and a dispersant for dispersing the silicone-based oil in the aqueous medium,
the aqueous medium comprises water and a polyhydric alcohol dissolved in the water,
the boiling point of the polyhydric alcohol is greater than 100°C,
the blending ratio of the silicone-based oil to 1 part by mass of the polyhydric alcohol is 0.5 to 50 parts by mass,
the blending ratio of the water to 1 part by mass of the polyhydric alcohol is 25 to 300 parts by mass, and
the blending ratio of the dispersant to 1 part by mass of the polyhydric alcohol is 0.1 to 50 parts by mass.

2. The contamination preventing agent composition according to claim 1, wherein the polyhydric alcohol is at least one selected from the group consisting of glycerin, ethylene glycol, diethylene glycol, triethylene glycol and polyethylene glycol.

3. The contamination preventing agent composition according to claim 1, wherein
the polyhydric alcohol is polyethylene glycol that is liquid at room temperature, and
the number of repeating oxyethylene units in the polyethylene glycol is 200 to 600.

4. The contamination preventing agent composition according to claim 3, wherein the polyethylene glycol has a hydroxyl value of 200 or more.

5. The contamination preventing agent composition according to any one of claims 1 to 4, wherein
the composition is used for applying to an upstream roll located on the upstream side of the multiple rolls in the dry part to form a liquid coating, for bringing a traveling body into contact with the liquid coating to transfer a part of the liquid coating to the traveling body, and for bringing the traveling body into contact with a downstream roll which is located downstream of the upstream roll to transfer the liquid coating to the downstream roll,
the roll is a dryer roll or a canvas roll,
when the roll is the dryer roll, the traveling body is a wet paper, and
when the roll is the canvas roll, the traveling body is a canvas.

6. The contamination preventing agent composition according to claim 5, wherein
the upstream roll and the downstream roll are made of cast iron,
the contact angle thereof with respect to the upstream roll and the downstream roll is 70° or less,
the viscosity thereof is 0.001 to 1.5 Pa s, and
the dynamic surface tension thereof is 25 mN/m or more.
